# EUROPEAN PATENT APPLICATION

(11) **EP 2 731 321 A1**
(43) Date of publication of application: **14.05.2014**
(21) Application number: 12810549.1
(22) Date of filing: 22.06.2012
(51) Int. Cl.: H04M 3/00, H04L 12/00, H04W 80/10, H04W 92/24

(54) **MOBILE COMMUNICATION METHOD AND CALL SESSION CONTROL SERVER APPARATUS**

(30) Priority: 08.07.2011 JP 2011152255
(71) Applicant: NTT DOCOMO, INC., Chiyoda-ku Tokyo (JP)
(72) Inventor: OBATA, Hiroshi, Tokyo 100-6150 (JP); TOKUNAGA, Kazuhito, Tokyo 100-6150 (JP); TANAKA, Itsuma, Tokyo 100-6150 (JP)
(74) Representative: HOFFMANN EITLE
(86) International application number: PCT/JP2012/065971
(87) International publication number: WO 2013/008606

(57) **Abstract**

The invention avoids unnecessary transmission of signals, and shortens time for establishing a bearer for a UE. A mobile communication method of an embodiment includes the steps of: notifying, by a P-CSCF, when the P-CSCF receives a SIP signal #1, a PCRF of QoS corresponding to a SDP-A included in the SIP signal #1; transmitting, by the PCRF, a bearer establishment instruction signal #1 to an EPC on the basis of the QoS; and keeping the P-CSCF, when the P-CSCF receives a SIP signal #2 and the SDP-A included in the SIP signal #1 is the same as a SDP-B included in the SIP signal #2, from notifying the PCRF of the QoS corresponding to the SDP-B.

## Description

### TECHNICAL FIELD

The present invention relates to a mobile communication method and a call session control server apparatus.

### BACKGROUND ART

As shown in Non-patent Document 1, in a conventional mobile communication system defined by the 3GPP, a P-CSCF (Primary-Call Session Control Function, a call session control server apparatus) is configured, every time the P-CSCF receives a SIP (Session Initiation Protocol) signal that includes a SDP (Session Description Protocol), to notify a PCRF (Policy and Charging Rules Function, a policy and charging rules server apparatus) of QoS (Quality of Service) corresponding to the SDP in order to establish an IMS (IP Multimedia Subsystem) session and to guarantee a bandwidth.

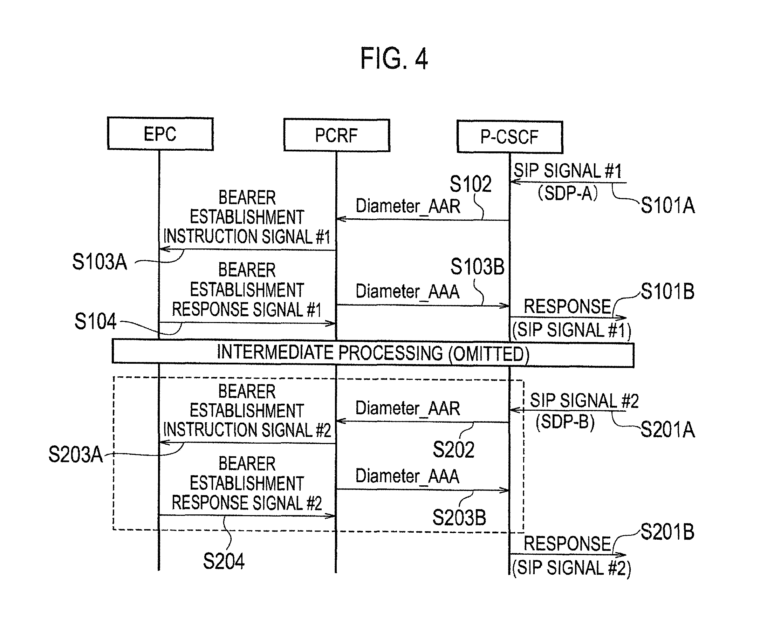

An operation of the mobile communication system will be described below with reference to Fig. 4.

As shown in Fig. 4, the P-CSCF receives a SIP signal #1 including a SDP-A from a UE (User Equipment, a mobile station) in step S101A. Then, in step S102, the P-CSCF sends the PCRF a QoS setting request signal (such as "Diameter_AAR") which includes QoS corresponding to the SDP-A.

In step S103A, the PCRF transmits a bearer establishment instruction signal #1 to an EPC (Evolved Packet Core, a core network), or a P-GW (PDN-Gateway; a packet data network gateway apparatus) in particular, based on the QoS corresponding to the SDP-A in order to instruct establishment of a bearer for the UE having the QoS corresponding to the SDP-A. In step S103B, the PCRF transmits a QoS setting response signal (such as "Diameter_AAA") to the P-CSCF.

The bearer establishment instruction signal #1 is transmitted to an eNB (a radio base station) via the P-GW, a S-GW (Serving-Gateway, a serving gateway apparatus), and a MME (Mobility Management Entity, a mobility management node). Hence, a user plane data forwarding bearer is established between the UE and the P-GW.

In step S104, the P-GW transmits a bearer establishment response signal #1 to the PCRF.

In step S101B, the P-CSCF sends the UE a response signal to the SIP signal #1.

Thereafter, the P-CSCF receives a SIP signal #2 including a SDP-B from the UE in step S201. Then, in step S202, the P-CSCF sends the PCRF a QoS setting request signal (such as "Diameter_AAR") which includes QoS corresponding to the SDP-B.

In step S203A, the PCRF transmits a bearer establishment instruction signal #2 to the EPC, or the P-GW in particular, based on the QoS corresponding to the SDP-B in order to instruct establishment of a bearer for the UE having the QoS corresponding to the SDP-B. In step S203B, the PCRF transmits a QoS setting response signal (such as "Diameter_AAA") to the P-CSCF.

The bearer establishment instruction signal #2 is transmitted to the eNB via the P-GW, the S-GW, and the MME. Hence, a user plane data forwarding bearer is established between the UE and the P-GW.

In step S204, the P-GW transmits a bearer establishment response signal #2 to the PCRF.

In step S201B, the P-CSCF sends the UE a response signal to the SIP signal #2.

### PRIOR ART DOCUMENT

### NON-PATENT DOCUMENT

Non-patent Document 1: 3GPP TS29.214

### SUMMARY OF THE INVENTION

In the operation of the mobile communication system described above, even when the SDP-A and the SDP-B have the same content, the P-CSCF sends the PCRF the QoS setting request signal (such as "Diameter_AAR"), which includes the QoS corresponding to the SDP-B, in step 202. In step 203A, the PCRF transmits the bearer establishment instruction signal #2 to instruct the establishment of the bearer for the UE having the QoS corresponding to the SDP-B.

Here, the SDP-A and the SDP-B have the same content. Accordingly, when the bearer establishment instruction signal #2 is received, the P-GW, the S-GW, the MME, and the eNB are supposed to merely update the QoS previously set up as the bearer for the UE with the same QoS (or not to perform any processing).

In other words, if the SDP-A and the SDP-B have the same content, the transmission of the QoS setting response signal (such as "Diameter_AAR") in step 202 triggers unnecessary processing, and poses a problem of requiring a long time for establishing the bearer for the UE as a consequence.

The present invention has been made in view of the aforementioned problem. An object of the present invention is to provide a mobile communication method and a call session control server apparatus, which are capable of avoiding unnecessary transmission of signals, and shortening time for establishing a bearer for a UE.

A first aspect of the present invention provides a mobile communication method which includes the steps of: notifying, by a call session control server apparatus, when the call session control server apparatus receives a first session initiation protocol signal, a policy and charging rules server apparatus of quality-of-service information corresponding to information on media included in the first session initiation protocol signal; transmitting, by the policy and charging rules server apparatus, a bearer establishment instruction signal to a core network on the basis of the quality-of-service information; and keeping, by the call session control server apparatus, when the call session control server apparatus receives a second session initiation protocol signal and the information on the media included in the first session initiation protocol signal is the same as information on the media included in the second session initiation protocol signal, from notifying the policy and charging rules server apparatus of quality-of-service information corresponding to the information on the media included in the second session initiation protocol signal.

A second aspect of the present invention provides a call session control server apparatus which includes: a transmission unit configured, when a first session initiation protocol signal is received, to notify a policy and charging rules server apparatus of quality-of-service information corresponding to information on media included in the first session initiation protocol signal. Here, when a second session initiation protocol signal is received and the information on the media included in the first session initiation protocol signal is the same as information on the media included in the second session initiation protocol signal, the transmission unit is kept from notifying the policy and charging rules server apparatus of quality-of-service information corresponding to the information on the media included in the second session initiation protocol signal.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a P-CSCF according to the first embodiment of the present invention.
[Fig. 3] Fig. 3 is a sequence diagram showing an operation of the mobile communication system according to the first embodiment of the present invention.
[Fig. 4] Fig. 4 is a sequence diagram showing an operation of a conventional mobile communication system.

### MODES FOR CARRYING OUT THE INVENTION

### [Mobile Communication System According to First Embodiment of the Invention]

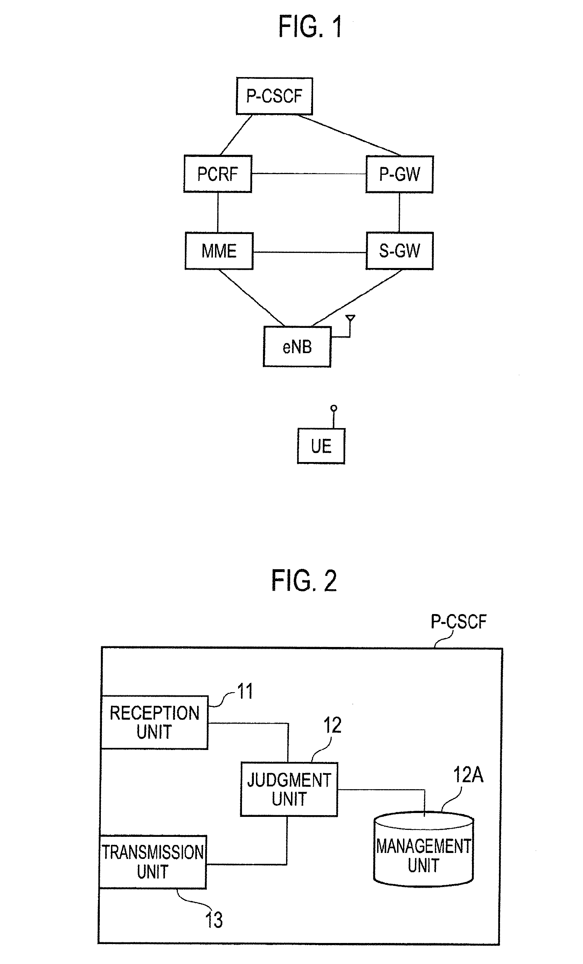

A mobile communication system according to a first embodiment of the present invention will be described with reference to Fig. 1 to Fig. 3.

As shown in Fig. 1, the mobile communication system according to the embodiment includes a P-CSCF, a PCRF, an EPC, and an eNB. In addition, a P-GW, a S-GW, and a MME are provided in the EPC.

Here, the PCRF is configured to perform QoS control processing, as well as authentication processing and user management processing at the time of connection to a PDN (Packet Data Network).

The P-GW is configured to perform processing for connection to the PDN, charging processing, and routing and forwarding processing of user packets. The S-GW is configured to perform routing and forwarding processing of the user packets.

The MME manages subscriber information. The MME is configured to perform establishment processing and releasing processing for a packet communication session (connection), and control processing for a handover (switching between radio base stations).

The P-CSCF is an apparatus for connection between an IMS and a UE that is an IMS terminal. The P-CSCF is configured to perform authentication processing.

As shown in Fig. 2, the P-CSCF includes a reception unit 11, a judgment unit 12, a management unit 12A, and a transmission unit 13.

The reception unit 11 is configured to receive various signals from the UE, the PCRF, and the like. For example, the reception unit 11 is configured to receive a SIP signal from the UE and to receive a QoS setting response signal (such as "Diameter_AAA") from the PCRF.

The judgment unit 12 is configured to judge whether or not a SDP-B included in a SIP signal #2 concerning a session #1, which is received from the UE, is the same as a SDP-A included in a SIP signal #1 concerning the session #1 managed by the management unit 12A.

Specifically, the management unit 12A is configured to perform management while associating a specific session with a SDP that is included in the latest SIP signal concerning the specific session.

The transmission unit 13 is configured to transmit various signals to the UE, the PCRF, and the like. For example, the transmission unit 13 is configured to transmit a QoS setting request signal (such as "Diameter_AAR") to the PCRF, and to transmit to the UE a response signal to the SIP signal.

Specifically, when the reception unit 11 receives the SIP signal #1 concerning the specific session #1 and when the judgment unit 12 judges that the SDP-A included in the SIP signal #1 is different from a SDP-0 included in a SIP signal #0 concerning the specific session #1 managed by the management unit 12A, the transmission unit 13 is configured to notify the PCRF of QoS corresponding to the SDP-A included in the SIP signal #1.

Meanwhile, when the reception unit 11 receives the SIP signal #1 concerning the specific session #1 and when the judgment unit 12 judges that the SDP-A included in the SIP signal #1 (the SIP signal concerning the specific session #1) is not managed by the management unit 12A, the transmission unit 13 is configured to notify the PCRF of the QoS corresponding to the SDP-A included in the SIP signal #1.

On the other hand, when the reception unit 11 receives the SIP signal #2 concerning the specific session #1 and when the judgment unit 12 judges that the SDP-B included in the SIP signal #2 is the same as the SDP-A included in the SIP signal #1 concerning the specific session #1 managed by the management unit 12A, the transmission unit 13 is kept from notifying the PCRF of QoS corresponding to the SDP-B included in the SIP signal #1.

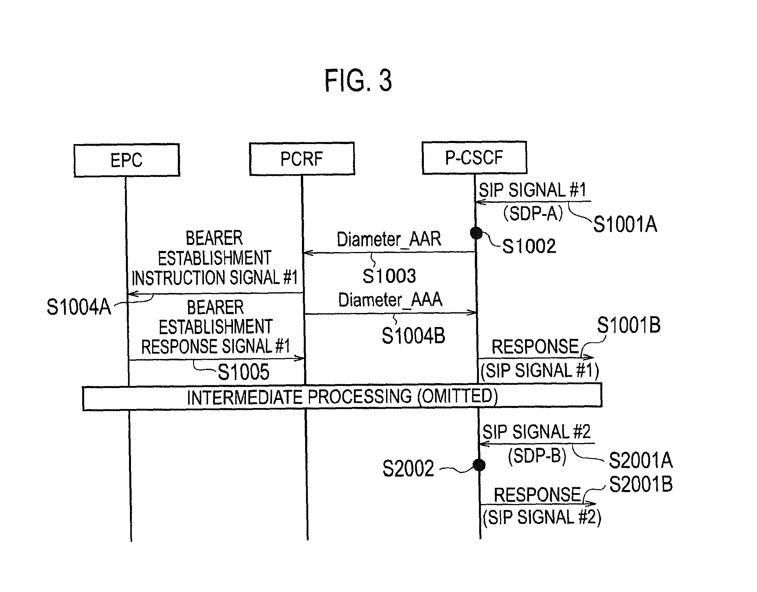

An example of an operation of the mobile communication system according to the embodiment will be described below with reference to Fig. 3.

As shown in Fig. 3, the P-CSCF receives the SIP signal #1 concerning the session #1, the signal including the SDP-A, from the UE in step S1001A. When the P-CSCF judges in step S1002 that no other SIP signals concerning the session #1 are managed, the P-CSCF sends the PCRF the QoS setting request signal (such as "Diameter_AAR"), which includes the QoS corresponding to the SDP-A, in step S1003.

In step S1004A, the PCRF transmits a bearer establishment instruction signal #1 to the EPC, or the P-GW in particular, based on the QoS corresponding to the SDP-A in order to instruct establishment of a bearer for the UE having the QoS corresponding to the SDP-A. In step S1004B, the PCRF transmits the QoS setting response signal (such as "Diameter_AAA") to the P-CSCF.

The bearer establishment instruction signal #1 is transmitted to the eNB via the P-GW, the S-GW, and the MME. Hence, a user plane data forwarding bearer is established between the UE and the P-GW.

In step S1005, the P-GW transmits a bearer establishment response signal #1 to the PCRF.

In step S1001B, the P-CSCF sends the UE a response signal to the SIP signal #1.

Thereafter, the P-CSCF receives the SIP signal #2 concerning the session #1, which includes the SDP-B, from the UE in step S2001. Then, in step S2002, the judgment unit 12 judges whether or not the SDP-B included in the SIP signal #2 is the same as the SDP-A included in the SIP signal #1 concerning the session #1 managed by the management unit 12A.

Here, when the SDP-A and the SDP-B are judged to be the same, the P-CSCF does not transmit to the PCRF a QoS setting request signal (such as "Diameter_AAR") which includes QoS corresponding to the SDP-B.

Then, in step S2001B, the P-CSCF sends the UE a response signal to the SIP signal #2.

According to the mobile communication system of the embodiment, when the SDP-B included in the SIP signal #2 concerning the session #1 received from the UE is judged to be the same as the SDP-A included in the SIP signal #1 concerning the session #1 managed by the management unit 12A, the P-CSCF is kept from transmitting to the PCRF the QoS setting request signal (such as "Diameter_AAR") which includes the QoS corresponding to the SDP-B.

As a result, unnecessary transmission of the QoS setting request signal (such as "Diameter_AAR") can be avoided and unnecessary bearer establishment processing by the PCRF, the P-GW, the S-GW, the MME, the eNB, and the like can consequently be avoided. Thus, it is possible to shorten time for establishing the bearer for the UE.

The above-described characteristics of the embodiment may also be expressed as follows.

A first characteristic of the embodiment is a mobile communication method which includes the steps of: notifying, by the P-CSCF (the call session control server apparatus), when the P-CSCF receives the SIP signal #1 (a first session initiation protocol signal), the PCRF (the policy and charging rules server apparatus) of the QoS (quality-of-service information) corresponding to the SDP-A (information on media) included in the SIP signal #1; transmitting, by the PCRF, the bearer establishment instruction signal #1 to the EPC (the core network) on the basis of the QoS; and keeping, by the P-CSCF, when the P-CSCF receives the SIP signal #2 (a second session initiation protocol signal) and the SDP-A included in the SIP signal #1 is the same as the SDP-B (information on the media) included in the SIP signal #2, from notifying the PCRF of the QoS corresponding to the SDP-B.

A second feature of the embodiment is the P-CSCF which includes the transmission unit 13 configured, when the SIP signal #1 is received, to notify the PCRF of the QoS corresponding to the SDP-A included in the SIP signal #1. Here, when the SIP signal #2 is received and the SDP-A included in the SIP signal #1 is the same as the SDP-B included in the SIP signal #2, the transmission unit 13 is kept from notifying the PCRF of the QoS corresponding to the SDP-B.

In the first and second characteristics of the embodiment, the SDP-A and the SDP-B may include codec information, bit rate information, sender address information, and receiver address information.

Note that the above-described operations of the UE, the eNB, the MME, the S-GW, the P-GW, the PCRF, a HSS, and the like may be implemented by hardware, a software module to be executed by a processor, or a combination thereof.

The software module may be provided in a storage medium of an arbitrary style such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to the processor so as to allow the processor to write and read information in and out of the storage medium. Alternatively, the storage medium may be integrated with the processor. In the meantime, the storage medium and the processor may be provided in an ASIC. The ASIC may be provided in the UE, the eNB, the MME, the S-GW, the P-GW, the PCRF, the HSS, and the like. Alternatively, the storage medium and the processor may be provided as discrete components in the UE, the eNB, the MME, the S-GW, the P-GW, the PCRF, the HSS, and the like.

While the present invention has been described above in detail using the embodiment, it is obvious to those skilled in the art that the present invention is not limited only to the embodiment described in this specification. The present invention can also be embodied in other modified and altered forms without departing from the gist and scope of the present invention as defined in the appended claims. It is therefore to be understood that the disclosure of this specification is intended for the purpose of description and exemplification but is not intended to limit the scope of the invention.

The entire contents of Japanese Patent Application No. 2011-152255 (filed on July 8, 2011) are incorporated in this specification by reference.

### INDUSTRIAL APPLICABILITY

As described above, according to the present invention, it is possible to provide a mobile communication method and a call session control server apparatus, which are capable of avoiding unnecessary transmission of signals, and shortening time for establishing a bearer for a UE.

### EXPLANATION OF THE REFERENCE NUMERALS

- UE: USER EQUIPMENT
- eNB: RADIO BASE STATION
- MME: MOBILITY MANAGEMENT Entity
- S-GW: SERVING GATEWAY APPARATUS
- P-GW: PACKET DATA NETWORK GATEWAY APPARATUS
- PCRF: POLICY AND CHARGING RULES SERVER APPARATUS
- P-CSCF: PRIMARY CALL SESSION CONTROL SERVER APPARATUS
- 11: RECEPTION UNIT
- 12: JUDGMENT UNIT
- 12A: MANAGEMENT UNIT
- 13: TRANSMISSION UNIT

## Claims

1. A mobile communication method comprising the steps of:
notifying, by a call session control server apparatus, when the call session control server apparatus receives a first session initiation protocol signal, a policy and charging rules server apparatus of quality-of-service information corresponding to information on media included in the first session initiation protocol signal;
transmitting, by a the policy and charging rules server apparatus, a bearer establishment instruction signal to a core network on the basis of the quality-of-service information; and
keeping , by the call session control server apparatus, when the call session control server apparatus receives a second session initiation protocol signal and the information on the media included in the first session initiation protocol signal is the same as information on the media included in the second session initiation protocol signal, from notifying the policy and charging rules server apparatus of the quality-of-service information corresponding to the information on the media included in the second session initiation protocol signal.

2. The mobile communication method according to claim 1, wherein the information on the media includes codec information, bit rate information, sender address information, and receiver address information.

3. A call session control server apparatus comprising:
a transmission unit configured, when a first session initiation protocol signal is received, to notify a policy and charging rules server apparatus of quality-of-service information corresponding to information on media included in the first session initiation protocol signal, wherein
when a second session initiation protocol signal is received and the information on the media included in the first session initiation protocol signal is the same as information on the media included in the second session initiation protocol signal, the transmission unit is kept from notifying the policy and charging rules server apparatus of the quality-of-service information corresponding to the information on the media included in the second session initiation protocol signal.

4. The call session server apparatus according to claim 3, wherein the information on the media includes codec information, bit rate information, sender address information, and receiver address information.
